# EUROPEAN PATENT SPECIFICATION

(11) **EP 3 016 333 B1**
(45) Date of publication and mention of the grant of the patent: **06.12.2017**
(21) Application number: 14191232.9
(22) Date of filing: 31.10.2014
(51) Int. Cl.: H04L 12/861

(54) **Handling high throughput and low latency network data packets in a traffic management device**
Handhabung von Netzwerkdatenpaketen mit hohem Durchsatz und mit geringer Latenz in einer Verkehrsverwaltungsvorrichtung
Gestion de paquets de données de réseau de haut rendement et à faible temps d'attente dans un dispositif de gestion de trafic

(43) Date of publication of application: 04.05.2016
(73) Proprietor: F5 Networks, Inc, Seattle, WA 98119 (US)
(72) Inventor: Michels, Tim S., Liberty Lake, WA Washington 99019 (US); Schmitt, Dave, Seattle, WA Washington 98119 (US); Szabo, Paul I., Seattle, WA Washington 98119 (US)
(74) Representative: Savi, Massimiliano

(56) References cited:
- WO-A1-2009/158680
- WO-A2-2004/079930
- US-A1- 2014 185 442
- US-A1- 2014 301 207

## Description

### TECHNICAL FIELD

The technology generally relates to network traffic management, and more particularly, to handling communications among network applications involving the transfer of data in protocols with different throughput and latency characteristics.

### BACKGROUND

The large number of network applications engaged in communications over various private and public networks (e.g., Internet) have imposed different demands on the network interface cards ("NICs") employed by the network devices involved in handling those communications. NICs generally handle data sent to or from a network device, generating processor interrupts as data is received or needs to be transmitted. Since interrupts are computationally expensive because the network device processors must switch context, it is generally desirable to interrupt the processors only as needed. Some data transfer protocols, such as FTP, however, are high throughput in nature because large numbers of packets are transferred at a time without requiring a relatively high number of processor interrupts for applications handling the packets. In this case, many packets may be coalesced before interrupting the processor.

Other types of data transfer protocols are low latency in nature because more frequent processor interrupts are needed by applications handling the packets. For example, the NFS protocol requires the receipt of confirmatory acknowledgement messages before subsequent file portions can be transmitted. In this case, the file transfer performance depends on the request to acknowledgement processing time or latency. Thus for such low latency type data, the best performance is achieved by interrupting processors immediately upon the arrival of packets embodying the file portions, which as noted above, is the exact opposite for high throughput type data.

Document WO2009158680 discloses a method and apparatus for efficiently transferring data between a first and second processors having shared memory. A plurality of data packets are aggregated into a packet bundle at the first processor. The packet bundle is then transferred from the first processor to the second processor using the shared memory, wherein the transfer of the packet bundle is performed in a single context switch at the first processor. The packet bundle is then unbundled into individual data packets at the second processor, wherein a processing load of the second processor is reduced due to the aggregation of the data packets into the packet bundle by the first processor.

### SUMMARY

An application delivery controller device is configured to manage network communications among one or more network applications operating on devices in a network. The application delivery controller device has one or more processors coupled to a memory and a network interface controller configured to receive, transmit and process network communication data packets. The application delivery controller device receives the data packets from the network to be processed by one of the processors in accordance with one or more traffic management applications executing on the processors. The data packets are stored in either a low latency packet queue or a high throughput packet queue in the memory coupled to the one or more processors of the device. The application delivery controller device processes the low latency classified packets until determining one or more high throughput classified packets are ready to be processed. The determination may be based on whether a threshold number of high throughput packets have been coalesced in the memory or periodically polling the memory to ascertain whether one or more high throughput packets are present. After processing the high throughput classified packets, the application delivery controller device resumes processing low latency classified packets.

This summary is intended to provide a brief introduction to some of the concepts covered in this disclosure. Additional aspects will be apparent to those of ordinary skill in the art in view of the detailed description of various embodiments, which is made with reference to the drawings, a brief description of which is provided below.

### BRIEF DESCRIPTION OF THE DRAWINGS

FIG. 1 is a diagram showing a network environment that may employ an application delivery controller capable of handling high throughput and low latency network data packets;
FIGs. 2 and 3 are diagrams of an example application delivery controller shown in FIG. 1; and
FIG. 4 is a flow chart of a process for handling high throughput and low latency network data packets that may be performed by the application delivery controller in FIGs. 2 and 3.

These examples may be practiced in many different forms without departing from the scope of the teachings in this disclosure. Therefore, it should be understood that the present disclosure should be considered an exemplification and is not limited to the example illustrations.

### DETAILED DESCRIPTION

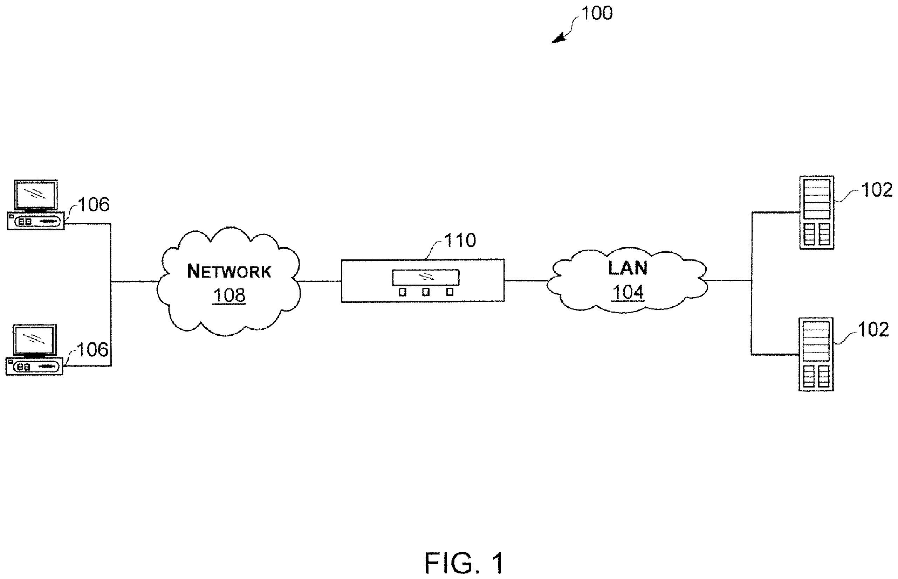

Referring to FIG. 1, an example system 100 includes one or more servers 102, one or more clients 106, and an application delivery controller device 110, which are coupled together by LAN 104 and network 108. While not shown, the system 100 may include additional network components, such as routers, switches and other devices. Generally, servers 102 process requests received from requesting clients 106 over LAN 104 and network 108 according to the HTTP-based application RFC protocol or the CIFS or NFS protocol in this example, but the principles discussed herein are not limited to this example and can include other application protocols. The application delivery controller device 110 is coupled to the server 102 through a local area network (LAN) 104 in this example, although the servers and controller may be coupled together via other topologies. The application delivery controller device 110 is also coupled to the client computers 106 through the network 108, for example, which may comprise any wide area network (e.g., Internet) or any other type of network topology. The client computers 106, in this example, may run interface applications such as Web browsers that may provide an interface to make requests for and send data to different web server based applications via the network 108. A series of applications may run on the servers 102 that allow the transmission of data that is requested by the client computers 106. The servers 102 may provide data or receive data in response to requests directed toward the respective applications on the servers 102 from the client computers 106. As per TCP, packets may be sent to the server 102 from the requesting client computers 106 to send data. It is to be understood that the servers 102 may be hardware or software or may represent a system with multiple servers 102, which may include internal or external networks. In this example the server 102 may be any version of Microsoft® IIS servers or Apache® servers, although other types of servers may be used. Further, additional servers may be coupled to the local area network 104 and many different types of applications may be available on servers coupled to the LAN 104.

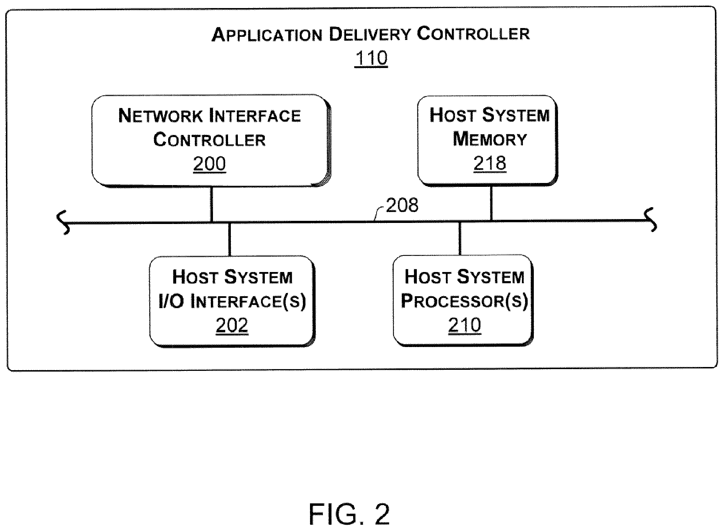

As will be described in further detail below in connection with FIGs. 2-3, the application delivery controller device 110 may include a network interface controller ("NIC") 200 to transmit and receive data packets from network 108 and the LAN 104. Various network processing applications, such as CIFS applications, NFS applications, HTTP Web Server applications, FTP applications, may be operating on servers 102 and transmitting data (e.g., files, Web pages) through the application delivery controller device 110 to clients 106 responsive to requests from those clients. It is to be understood that the NIC 200 may take the form of a network peripheral card that is installed inside a bus interface within application delivery controller device 110 or may be an embedded component as part of a computer processor motherboard, a router or printer interface, or a USB device that may be internal or external to the server 102.

In this example, the application delivery controller device 110 runs one or more traffic management applications on one or more host system processors 210 to manage network traffic by optimizing, securing and accelerating the traffic between clients 106 and servers 102, for example, although the controller device 110 may perform other network related functions, such as establishing virtual private networks. Moreover, the network traffic managed by the application delivery controller device 110 may be received and transmitted by the device 110 from and to the LAN 104 and network 108 in the form of network data packets in the TCP/IP protocol, although the network data packets could be in other network protocols.

Referring now to FIGs. 2-3, an example application delivery controller device 110 configured to handle both high throughput data packets and low latency data packets transmitted between clients 106 and servers 102 over LAN 104 and network 108 will now be described. In this example, the application delivery controller device 110 includes the NIC 200, host system I/O interface(s) 202, host system processors 210, and host system memory 218, which are coupled together by bus 208. Although the application delivery controller device 110 is shown in FIG. 1 in this example as being a standalone device, such as a BIG-IP® application delivery controller offered by F5 Networks, Inc., of Seattle, WA, it should be appreciated that the device 110 could also be one of several blades servers coupled to a chassis device, such as a VIPRION® application delivery controller, also offered by F5 Networks, Inc., of Seattle, WA.

NIC 200 may comprise specialized hardware to achieve maximum execution speeds, such a field programmable gate arrays ("FPGAs"), although other hardware and/or software may be used, such as ASICs, field programmable logic devices ("FPLDs"), programmable logic units ("PLUs"), software executed by the host system processor 210, and combinations thereof. The use of the specialized hardware in this example, however, allows the NIC 200 to rapidly respond to received packets and to rapidly classify packets as being low latency or high throughput, as will be described in further detail below.

The bus 208 is a hyper-transport bus in this example, although other bus types may be used, such as PCI. Host system input/output interfaces 202 include one or more keyboard/mouse interfaces, display devices interfaces, and other physical and/or logical mechanisms for enabling the controller 110 to communicate with the outside environment, which includes network 108, LAN 104 and users (e.g., administrators) desiring to interact with the controller 110, such as to configure, program or operate it.

Host system processor(s) 210 executes the traffic management applications 212 that handle the network traffic between applications on the clients 106 and servers 102 being managed by the controller device 110, as mentioned earlier, as well as one or more computer-executable instructions stored in the host system memory 218, as well as other operations as mentioned herein. The host system processor(s) 210 may comprise one or more central processing units ("CPUs") or general purpose processors with one or more processing cores, such as AMD® processor(s), although other types of processor(s) could be used (e.g., Intel®).

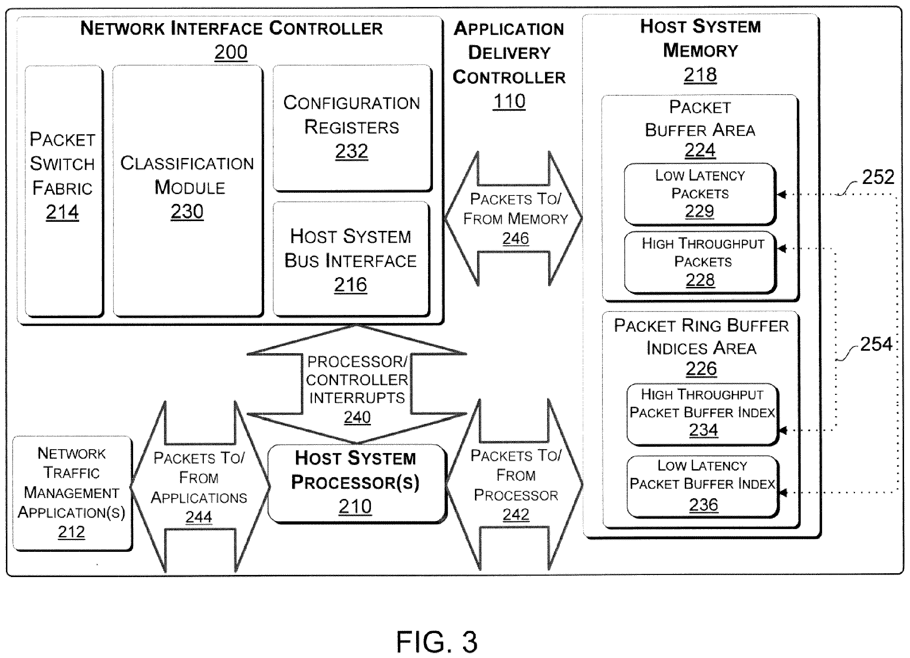

Host system memory 218 may comprise one or more tangible storage media such as, for example, RAM, ROM, flash memory, CD-ROM, floppy disk, hard disk drive(s), solid state memory, DVD, or any other memory storage type or devices, including combinations thereof, which are known to those of ordinary skill in the art. Host system memory 218 stores the data packets received by NIC 200 in a packet buffer area 224, which is a non-contiguous memory storage space area, although contiguous memory may be used. Data packets classified by the classification module 230 (and/or the processor 210) are stored as low latency packets 229 and high throughput packets 228 in the packet buffer area 224 within memory 218. Further, the memory 218 includes a packet ring buffer indices area 226, which is a dedicated contiguous memory space that includes high throughput packet buffer index 234 and low latency packet buffer index 236, although other memory storage constructs could be used. Generally, the indices 234, 236 store an index to the location of the next low latency packet(s) 229 or high throughput packet 228 within the packet buffer area 224 to be processed by the processor(s) 210 the next time an interrupt is generated for processing either type of data in the form of a ring buffer, although other types of buffers may be used. As shown in FIG. 3, data packets 228 for high throughput and data packets 229 for low latency may be written in the packet buffer area 224. Although the packets 228 and 229 are shown written consecutively for convenience and ease of description in FIG. 3, it is to be understood that the packets 228 and 229 may be written in any order in any part of the packet buffer area 224.

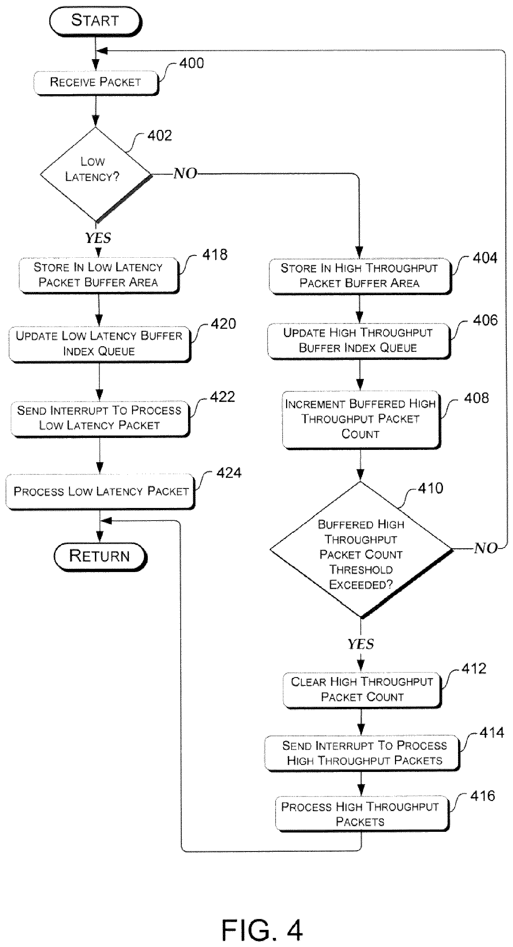

Further, host system memory 218 also stores one or more computer-readable instructions that may be executed by the one or more host system processor(s) 210 and/or the NIC 200. When these stored instructions are executed, they may implement a process that is illustrated, for exemplary purposes only, by the flow chart diagram shown in FIG. 4. It should be appreciated that the flow chart diagram shown in FIG. 4 is representative of example steps or actions that may be embodied or expressed as one or more computer or machine readable instructions that may be executed by the NIC 200 and/or the processor(s) 210 in the application delivery controller device 110 shown in FIGS. 1-3. In this example, the machine readable instructions may embody an algorithm or computer program for execution by at least one of: (a) one or more processors each having one or more processor cores, (b) hardware specifically configured to perform the instructions (e.g., ASICs, FPGAs) and (c) one or more other suitable processing device(s). The algorithm or computer program may be embodied in software stored on host system memory 218, for example.

Moreover, persons of ordinary skill in the art will readily appreciate that the entire algorithm or computer program, and/or parts thereof, could alternatively be executed by a device other than a processor and/or embodied in firmware or dedicated hardware in a well-known manner (e.g., it may be implemented by an application specific integrated circuit (ASIC), a programmable logic device (PLD), a field programmable logic device (FPLD), a field programmable gate array (FPGA), discrete logic, etc.). For example, any or all of the components of the NIC 200, the application delivery controller device 110, or even the clients 106/server 102, could be implemented by software, hardware, and/or firmware (and combinations thereof). Further, although the example algorithm is described with reference to the flowchart illustrated in FIG. 4, persons of ordinary skill in the art will readily appreciate that many other methods of implementing the example machine readable instructions may alternatively be used. For example, the order of execution of the blocks may be changed, and/or some of the blocks described may be changed, eliminated, or combined.

Packet switch fabric 214 includes one or more physical network ports (not shown), such as Ethernet ports, a host system bus interface 216, a classification logic module 230 and a configuration register 232. The NIC 200 accesses the memory 218 of the application delivery controller device 110 via one or more DMA transfer channels established to transfer packets 246. The packets 228 and 229 stored in the packet buffer area 224 of the memory 218 are indexed via either a high throughput queue 234 or a low latency queue 236 stored in the ring buffer area 226 in the memory 218. Incoming packets 228 or 229 may be written to the buffer area 224 by the NIC 200 for handling by the appropriate processor 210 in the application delivery controller device 110 when an interrupt is sent. A low latency pointer 252 or a high throughput pointer 254 to the location of the packet in the buffer area 224 is assigned to either the high throughput queue 234 or the low latency queue 236 in the ring buffer area 226. The queues 234 and 236 also store DMA descriptors of the packets.

As will be further explained, the NIC 200 may use the high throughput queue 234 and the low latency queue 236 to interrupt the processors 210 of the application delivery controller device 110 and direct one of the processors 210 to the location of a packet or packets in the buffer area 224 for the purpose of processing the incoming data packets depending on the type of data by sending the packets 244 to the respective applications 212 run by the host system processor(s) 210. The NIC 200 in the controller device 110 in this example may establish one or more DMA channels 246 over which to perform one or more DMA memory transfers to write data packets received by NIC 200 in the appropriate locations of the memory 218 in the application delivery controller device 110. The frequency of sending interrupts 240 to handle each of the respective queues 234 and 236 and the corresponding indexed packets in the buffer area 224 may be determined by setting the configuration register 232. The classification logic 230 may determine the type of data in incoming packets and therefore may assign the packet to one of the queues 234 or 236, which are in turn set for interrupt frequencies for either high throughput or low latency.

If the incoming packet includes data in a particular protocol that requires high throughput, such as the packets 228, the pointer or pointers 254 to the location of the packets 228 stored in the buffer area 224 may be added to the high throughput packet buffer queue or index 234. The high throughput packet queue 234 may be used with interrupt coalescing and therefore the NIC 200 allows numerous packets 228 to be stored in the buffer area 224 of the memory 218 before interrupting one or more of the host system processor(s) 210 to use the high throughput queue 234 for accessing multiple packets 228 from the buffer area 224. The intermittent interrupts 240 ensure the ability to maintain a high throughput through the NIC 200 since interrupts 240 are kept at a minimum, allowing one or more of the processor(s) 210 maximum uninterrupted processing of high throughput classified data packets. Alternatively, the high throughput queue 234 in memory 218 may be polled periodically by an application executing on one or more of the processors 210 to determine if pointers have been written in the queue, although logic in the NIC 200 could be configured to poll the memory 218 as well. In either case, the processor 210 handles the accumulated packets associated with the pointers in the high throughput queue 234.

Conversely, if the classification logic 230 determines the incoming packets require low latency, a low latency pointer 252 to the location of low latency packets 229 stored in the buffer area 224 may be added to the low latency packet buffer index or queue 236. The NIC 200 may be configured via the configuration register 232 to interrupt the processor(s) 210 immediately upon determining that a pointer 252 has been added to cause generating numerous interrupts 240 to use the low latency queue 236 for accessing the indexed packets 229, if so desired. Such a configuration would decrease the latency time for files that require multiple requests and acknowledgments to be sent for receiving the entirety of data.

One example of the classification logic 230 may classify the packets as high throughput or low latency according to the information in the packet header, such as information the logic 230 may use to either infer or directly identify the protocols that the packet data is in, since certain protocols are known to be low latency or high throughput in nature as mentioned previously, although a variety of other packet characteristics and methods may be used to classify the packets, such as using mappings maintained by the controller 110 between high throughput and low latency classifications with packets from particular data flows, for example. Alternatively, the classification logic 230 may classify packets as high throughput or low latency according to the data in the packet payload according to predefined rules for identifying certain data patterns, characteristics, or particular content, although the control 110 may be flexibly configured by a user of the controller 110, such as a network administrator, for example, to classify the packets based on any type of desired criteria.

Alternatively, a dedicated processor of the processors 210 on the application delivery controller device 110 may assist in processing packets received by the NIC 200. The dedicated processor is external to the NIC 200 and may perform various functions as described below. In this example, the NIC 200 receives the packets via the Ethernet link 206 and stores the packet in the buffer area 224 of the memory 218. The NIC 200 may pass the packet pointer to a high speed polling application 212 run by the dedicated processor 210 on the application delivery controller device 110. The high speed polling application 212 may determine whether the packet pointer should be assigned to the high throughput queue 234 or the low latency queue 236 and then adds the pointer to the appropriate queue 234 or 236 instead of the classification logic 230 in FIG. 3. As explained above, the NIC 200 then bases the interrupts 240 depending on the configuration of the queues 234 and 236 in order to maximize throughput or low latency periods for the data for the appropriate application 212.

Each of the server 102, application delivery controller device 110, and client computers 106 may include a central processing unit (CPU), controller or processor, a memory, and an interface system that are coupled together by a bus or other link, although other numbers and types of each of the components and other configurations and locations for the components can be used. The processors in the server 102, application delivery controller device 110, and client computers 106 may execute a program of stored instructions for one or more aspects of the methods and systems as described herein, including for efficient handling of different types of data, although the processor could execute other types of programmed instructions. The memory may store these programmed instructions for one or more aspects of the methods and systems as described herein, including the method for efficient handling of different types of data, although some or all of the programmed instructions could be stored and/or executed elsewhere. A variety of different types of memory storage devices, such as a random access memory (RAM) or a read only memory (ROM) in the system or a floppy disk, hard disk, CD ROM, DVD ROM, or other computer readable medium that is read from and/or written to by a magnetic, optical, or other reading and/or writing system that is coupled to the processor, may be used for the memory. The user input device may comprise a computer keyboard and a computer mouse, although other types and numbers of user input devices may be used. The display may comprise a computer display screen, such as a CRT or LCD screen by way of example only, although other types and numbers of displays could be used.

Although an example of the server 102, application delivery controller device 110, and client computers 106 are described and illustrated herein in connection with FIGS. 1-3, each of the computers of the system 100 could be implemented on any suitable computer system or computing device. It is to be understood that the example devices and systems of the system 100 are for exemplary purposes, as many variations of the specific hardware and software used to implement the system 100 are possible, as will be appreciated by those skilled in the relevant art(s).

Furthermore, each of the devices of the system 100 may be conveniently implemented using one or more general purpose computer systems, microprocessors, digital signal processors, micro-controllers, application specific integrated circuits (ASIC), programmable logic devices (PLD), field programmable logic devices (FPLD), field programmable gate arrays (FPGA) and the like, programmed according to the teachings as described and illustrated herein, as will be appreciated by those skilled in the computer, software, and networking arts.

In addition, two or more computing systems or devices may be substituted for any one of the systems in the system 100. Accordingly, principles and advantages of distributed processing, such as redundancy, replication, and the like, also can be implemented, as desired, to increase the robustness and performance of the devices and systems of the system 100. The system 100 may also be implemented on a computer system or systems that extend(s) across any network environment using any suitable interface mechanisms and communications technologies including, for example telecommunications in any suitable form (e.g., voice, modem, and the like), Public Switched Telephone Network (PSTNs), Packet Data Networks (PDNs), the Internet, intranets, a combination thereof, and the like.

The operation of the example process to handle both high throughput and low latency data shown in FIG. 4 will now be described with reference back to FIGs. 1-3. In this example, one of network traffic management application(s) 212 executing on one of the processors 210 may be communicating with a first application, such as an NFS application, which may be transmitting data packets 244 classified by the classification module 230 as being low latency type data. Moreover, the network traffic management application 212, or another one of the traffic management application(s) 212, executing on the same or a different processor 210, may be communicating with a second application, such as an FTP application, which may be transmitting data packets 244 classified by the classification module 230 as being high throughput type data.

Referring now to FIG. 4, the process begins by the NIC 200 in application delivery controller device 110 receiving one or more network data packets from one or more of the servers 102 in the LAN 104, although the packets may be received from one or more of the clients 106 in the network 108 (400). In this example, the received packets may be in a TCP/IP protocol with a header and a payload, although the packets could be in other protocols. The classification logic 230 of the NIC 200 classifies the network data packets into at least one of high throughput classified packets and low latency classified packets based on one or more packet characteristics, which determines whether the received packet should be accessed by a processor for high throughput or low latency (402). The determination may be made based on the type of data determined through the packet header or even the data payload itself as mentioned above earlier. The determination may also be determined based on the application to receive the data or the application that sent the data. If the packet is determined to be of a high throughput type, the packet is written to the buffer area 224 of the memory 218 (404). The classification logic 230 may then write the index or pointer to the packet to the high throughput queue 234 in FIG. 2 (406).

A coalesce count is incremented after the pointer is written to the high throughput queue (408). The high throughput queue 234 is accessed by the NIC 200 according to the configuration register 232 to coalesce interrupts 240 sent to a processor, such as the host system processor(s) 210 of the application delivery controller 110 shown in FIG. 2. In this example, the NIC 200 may determine whether there are sufficient packets indexed in the queue 234 by determining if the coalesce count exceeds a threshold number (410). If there are insufficient numbers of packets, the process loops around for a next check period of receiving packets. If there are sufficient packets, the NIC 200 clears the coalesce count (412).

The NIC 200 then sends an interrupt to the appropriate processor such as the processor 210 (414). The processor 210 may receive the interrupt and access the appropriate locations of the buffer area 224 shown in FIG. 2 to receive the packets 228 (416). Since interrupts are relatively infrequent, a high throughput of data may be maintained to the processor 210, which may manage data for a high throughput application of the applications 212 in FIG. 3.

If the packet is determined to require low latency (402), the packet is written to the buffer area 224 of the memory 218 (418). The classification logic 230 then updates the low latency queue 236 (420) with the pointer to the area where the packet is stored. In this example, the NIC 200 is configured via the configuration register 232 to send an interrupt based on a new pointer written in the low latency queue 236 (422).

Since low latency classified data packets involve more frequent data accesses to process the packets for achieving low latency, the determination of whether to send an interrupt may be based on simply the arrival of a new packet written in the low latency queue 236. In this example, the NIC 200 may determine whether there is a new packet indexed in the queue 236. The NIC 200 sends an interrupt for a particular one of the processor(s) 210 to process the packet, although any available one of the processor(s) 210 could be directed to process the packet (422). The processor 210 may receive the interrupt and access the appropriate locations of the buffer area 224 shown in FIG. 3 to receive the packets 229 (424). Since interrupts 240 are relatively frequent, a low latency for data may be maintained to the processor 210, which may manage data for a low latency application of the applications 212 in FIG. 3. It is to be understood that the interrupts 240 may be coalesced for the low latency queue 236 after a small number of pointers have been written to the low latency queue 236 instead of after each pointer as explained above. Thus, the interrupt timing with respect to processing data packets classified as low latency and data packets classified as high latency will be different to optimize the efficiency of the processors 210.

Having thus described the basic concepts, it will be rather apparent to those skilled in the art that the foregoing detailed disclosure is intended to be presented by way of example only, and is not limiting. Various alterations, improvements, and modifications will occur and are intended to those skilled in the art, though not expressly stated herein. For example, different non-TCP networks may be selected by a system administrator. Also, rather than having one device or server with different processors, a virtualized server where one guest operating system is running a low latency application and another guest operating system is running a high throughput application may be serviced via the network interface controller. The processes described herein may be applied to egress or ingress packets. In such a case, the host processor 210 of the application controller 110, after the application running on the processor 210 finishes processing a packet from the LAN 104, would notify the NIC 200 to let it know that it has buffered a packet into host memory 218 that is ready to be transmitted out to the network by the NIC 200 (and DMA transferred by the NIC from the host memory when it is ready to do so). The order that the measures are implemented may also be altered. These alterations, improvements, and modifications are intended to be suggested hereby, and are within the scope of the examples. Additionally, the recited order of processing elements or sequences, or the use of numbers, letters, or other designations therefore, is not intended to limit the claimed processes to any order except as may be specified in the claims. Accordingly, the disclose technology is limited only by the following claims and equivalents thereto.

## Claims

1. A method for processing network data packets destined for applications with a plurality of throughput and latency requirements, the method implemented by a network traffic management system (100) comprising an application delivery controller apparatus (110), the method comprising:
receiving data packets from a network;
classifying the data packets as high throughput classified and low latency classified based on one or more characteristics of each of the data packets;
storing the data packets in a respective one of a low latency packet queue or a high throughput packet queue based on the classification;
**characterized in that** the method further comprises
processing low latency classified packets from the low latency packet queue;
determining whether a predetermined number of the data packets are stored in the high throughput packet queue; and
when it is determined that the predetermined number of the data packets are stored in the high throughput packet queue:
interrupting the processing of the low latency classified packets and processing one or more high throughput classified packets from the high throughput packet queue; and
resuming the processing of the low latency classified packets upon processing a number of the high throughput classified packets.

2. The method according to claim 1, **characterized in that** the determining further comprises at least one of:
polling a memory to determine whether the predetermined number of the data packets are stored in the high throughput packet queue; or
determining whether any other condition exists such that high throughput classified packets should be processed instead of low latency classified packets.

3. The method according to claim 1, further comprising interrupting a processor (210) upon at least one of the classifying the data packets or the storing the data packets in the low latency packet queue.

4. The method according to claim 3, **characterized in that** there are fewer data packets stored in the low latency packet queue than the high throughput packet queue when the interrupting of the processing of the low latency classified packets occurs.

5. The method according to claim 1, **characterized in that** the one or more characteristics are selected by a network traffic management application executed by a processor (210).

6. A non-transitory computer-readable medium having instructions stored thereon, which when executed by one or more processors (210) of an application delivery controller device (110), causes the one or more processors (210) to perform a method for processing network data packets destined for applications with a plurality of throughput and latency requirements, according to one or more of the claims from 1 to 5.

7. An application delivery controller apparatus (110) comprising:
one or more processors (210) configured to be capable of executing one or more traffic management applications;
a memory (218);
a network interface controller (200) coupled to the one or more processors (210) and the memory (218) and configured to be capable of receiving data packets from a network that relate to the one or more network traffic management applications; and
at least one of the one or more processors (210) or the network interface controller (200) configured to be capable of:
classifying the data packets as high throughput classified and low latency classified based on one or more characteristics of each of the data packets;
storing the data packets in a respective one of a low latency packet queue or a high throughput packet queue in the memory based on the classification;
**characterized in that** at least one of said one or more processors (210) or said network interface controller (200) are further configured to be capable of
processing low latency classified packets from the low latency packet queue;
determining whether a predetermined number of the data packets are stored in the high throughput packet queue; and
when it is determined that the predetermined number of the data packets are stored in the high throughput packet queue:
interrupting the processing of the low latency classified packets and processing one or more high throughput classified packets from the high throughput packet queue; and
resuming processing the low latency classified packets upon processing a number of the high throughput classified packets.

8. The apparatus according to claim 7, **characterized in that** the determining further comprises at least one of:
polling the memory to determine whether the predetermined number of the data packets are stored in the high throughput packet queue; or
determining whether any other condition exists such that high throughput classified packets should be processed instead of low latency classified packets.

9. The apparatus according to claim 7, **characterized in that** at least one of the one or more processors (210) or the network interface controller (200) is further configured to be capable of interrupting at least one of the one or more processors upon at least one of the classifying the data packets or the storing the data packets in the low latency packet queue.

10. The apparatus according to claim 9, **characterized in that** there are fewer data packets stored in the low latency packet queue than the high throughput packet queue when the interrupting of the processing of the low latency classified packets occurs.

11. The apparatus according to claim 7, **characterized in that** classifying the data packets further comprises:
writing a first pointer to a memory location of the data packets stored in the low latency packet queue into a first buffer index area in the memory; and
writing a second pointer to another memory location of the data packets stored in the high throughput packet queue into a second buffer index area in the memory.

12. The apparatus according to claim 7, **characterized in that** the one or more processors (210) execute the one or more network traffic management applications which interact with at least one of the low latency classified packets or the high throughput classified packets.

13. The apparatus according to claim 7, **characterized in that** the low latency classified packets are processed by a first processor and the high throughput classified packets are processed by a second processor.

14. The apparatus according to claim 7, **characterized in that** the one or more characteristics are selected by the one or more network traffic management applications.

## Patentansprüche

1. Verfahren zum Verarbeiten von Netzwerkdatenpaketen, die für Anwendungen mit einer Vielzahl von Anforderungen an Durchsatz und Latenz bestimmt sind, wobei das Verfahren von einem Netzwerkverkehrsmanagementsystem (100) implementiert wird, das eine Anwendungsauslieferungscontrollervorrichtung (110) umfasst, wobei das Verfahren umfasst, dass:
Datenpakete aus einem Netzwerk empfangen werden;
die Datenpakete auf der Grundlage einer oder mehrer Eigenschaften eines jeden Datenpakets als für hohen Durchsatz klassifiziert und für geringe Latenz klassifiziert eingestuft werden;
die Datenpakete auf der Grundlage der Einstufung jeweils entweder in einer Warteschlange für Pakete mit geringer Latenz oder einer Warteschlange für Pakete mit hohem Durchsatz gespeichert werden;
**dadurch gekennzeichnet, dass** das Verfahren ferner umfasst, dass:
für geringe Latenz klassifizierte Pakete aus der Warteschlange für Pakete mit geringer Latenz verarbeitet werden;
festgestellt wird, ob eine vorbestimmte Anzahl der Datenpakete in der Warteschlange für Pakete mit hohem Durchsatz gespeichert ist; und
wenn festgestellt wird, dass die vorbestimmte Anzahl der Datenpakete in der Warteschlange für Pakete mit hohem Durchsatz gespeichert ist:
die Verarbeitung der Pakete, die für geringe Latenz klassifiziert sind, unterbrochen wird und ein oder mehrere Pakete, die für hohen Durchsatz klassifiziert sind, aus der Warteschlange für Pakete mit hohem Durchsatz verarbeitet werden; und
nach dem Verarbeiten einer Anzahl der für hohen Durchsatz klassifizierten Pakete das Verarbeiten der für geringe Latenz klassifizierten Pakete wieder aufgenommen wird.

2. Verfahren nach Anspruch 1, **dadurch gekennzeichnet, dass** das Feststellen ferner umfasst, dass:
ein Speicher zyklisch abgefragt wird, um festzustellen, ob die vorbestimmte Anzahl der Datenpakete in der Warteschlange für Pakete mit hohem Durchsatz gespeichert ist; und/oder
festgestellt wird, ob eine beliebige andere Bedingung existiert, so dass Pakete, die für hohen Durchsatz klassifiziert sind, anstelle der Pakete, die für geringe Latenz klassifiziert sind, verarbeitet werden sollen.

3. Verfahren nach Anspruch 1, das ferner umfasst, dass ein Prozessor (210) unterbrochen wird, nachdem die Datenpakete klassifiziert wurden und/oder die Datenpakete in der Warteschlange für Pakete mit geringer Latenz gespeichert wurden.

4. Verfahren nach Anspruch 3, **dadurch gekennzeichnet, dass** in der Warteschlange für Pakete mit geringer Latenz weniger Datenpakete als in der Warteschlange für Pakete mit hohem Durchsatz gespeichert sind, wenn das Unterbrechen der Verarbeitung der Pakete, die für geringe Latenz klassifiziert sind, stattfindet.

5. Verfahren nach Anspruch 1, **dadurch gekennzeichnet, dass** die eine oder die mehreren Eigenschaften von einer Netzwerkverkehrsmanagementanwendung gewählt werden, die von einem Prozessor (210) ausgeführt wird.

6. Nicht vorübergehendes, computerlesbares Medium, das darin gespeicherte Anweisungen aufweist, welche veranlassen, wenn sie von einem oder mehreren Prozessoren (210) einer Anwendungsauslieferungscontrollervorrichtung (110) ausgeführt werden, dass der eine oder die mehreren Prozessoren (210) ein Verfahren zum Verarbeiten von Netzwerkdatenpaketen, die für Anwendungen mit einer Vielzahl von Anforderungen an Durchsatz und Latenz bestimmt sind, in Übereinstimmung mit einem oder mehreren der Ansprüche von 1 bis 5 ausführt oder ausführen.

7. Anwendungsauslieferungscontrollervorrichtung (110), die umfasst:
einen oder mehrere Prozessoren (210), die so ausgestaltet sind, dass sie geeignet sind, eine oder mehrere Verkehrsmanagementanwendungen auszuführen;
einen Speicher (218);
einen Netzwerkschnittstellencontroller (200), der mit dem einen oder den mehreren Prozessoren (210) und dem Speicher (218) gekoppelt ist und so ausgestaltet ist, dass er zum Empfangen von Datenpaketen aus einem Netzwerk geeignet ist, die die eine oder die mehreren Netzwerkverkehrsmanagementanwendungen betreffen; und
wobei mindestens einer des einen oder der mehreren Prozessoren (210) oder der Netzwerkschnittstellencontroller (200) so ausgestaltet sind, dass sie geeignet sind, um:
die Datenpakete auf der Grundlage einer oder mehrerer Eigenschaften jedes Datenpakets als für hohen Durchsatz klassifiziert und für geringe Latenz klassifiziert einzustufen;
auf der Grundlage der Einstufung die Datenpakete jeweils entweder in einer Warteschlange für Pakete mit geringer Latenz oder in einer Warteschlange für Pakete mit hohem Durchsatz zu speichern;
**dadurch gekennzeichnet, dass** mindestens einer des einen oder der mehreren Prozessoren (210) oder der Netzwerkschnittstellencontroller (200) ferner so ausgestaltet sind, dass sie geeignet sind, um
Pakete, die für geringe Latenz klassifiziert sind, aus der Warteschlange für Pakete mit geringer Latenz zu verarbeiten;
festzustellen, ob eine vorbestimmte Anzahl der Datenpakete in der Warteschlange für Pakete mit hohem Durchsatz gespeichert ist; und
wenn festgestellt wird, dass die vorbestimmte Anzahl der Datenpakete in der Warteschlange für Pakete mit hohem Durchsatz gespeichert ist:
die Verarbeitung der Pakete, die für geringe Latenz klassifiziert sind, zu unterbrechen und ein oder mehrere Pakete, die für hohen Durchsatz klassifiziert sind, aus der Warteschlange für Pakete mit hohem Durchsatz zu verarbeiten; und
nach dem Verarbeiten einer Anzahl der Pakete, die für hohen Durchsatz klassifiziert sind, das Verarbeiten der Pakete, die für geringe Latenz klassifiziert sind, wieder aufzunehmen.

8. Vorrichtung nach Anspruch 7, **dadurch gekennzeichnet, dass** das Feststellen ferner umfasst, dass:
der Speicher zyklisch abgefragt wird, um festzustellen, ob die vorbestimmte Anzahl der Datenpakete in der Warteschlange für Pakete mit hohem Durchsatz gespeichert ist; und/oder
festgestellt wird, ob eine beliebige andere Bedingung existiert, so dass die Pakete, die für hohen Durchsatz klassifiziert sind, anstelle der Pakete, die für geringe Latenz klassifiziert sind, verarbeitet werden sollen.

9. Vorrichtung nach Anspruch 7, **dadurch gekennzeichnet, dass** mindestens einer von dem einen oder den mehreren Prozessoren (210) oder der Netzwerkschnittstellencontroller (200) ferner so ausgestaltet sind, dass sie geeignet sind, mindestens einen des einen oder der mehreren Prozessoren zu unterbrechen, nachdem die Datenpakete klassifiziert wurden und/oder die Datenpakete in der Warteschlange für Pakete mit geringer Latenz gespeichert wurden.

10. Vorrichtung nach Anspruch 9, **dadurch gekennzeichnet, dass** weniger Datenpakete in der Warteschlange für Pakete mit geringer Latenz als in der Warteschlange für Pakete mit hohem Durchsatz gespeichert sind, wenn das Unterbrechen der Verarbeitung der Pakete stattfindet, die für geringe Latenz klassifiziert sind.

11. Vorrichtung nach Anspruch 7, **dadurch gekennzeichnet, dass** das Einstufen der Datenpakete ferner umfasst, dass:
ein erster Zeiger auf eine Speicherstelle der Datenpakete, die in der Warteschlange für Pakete mit geringer Latenz gespeichert sind, in einen ersten Pufferindexbereich in dem Speicher geschrieben wird; und
ein zweiter Zeiger auf eine andere Speicherstelle der Datenpakete, die in der Warteschlange für Pakete mit hohem Durchsatz gespeichert sind, in einen zweiten Pufferindexbereich in dem Speicher geschrieben wird.

12. Vorrichtung nach Anspruch 7, **dadurch gekennzeichnet, dass** der eine oder die mehreren Prozessoren (210) die eine oder die mehreren Netzwerkverkehrsmanagementanwendungen ausführen, welche mit den Paketen, die für geringe Latenz klassifiziert sind, und/oder mit den Paketen, die für hohen Durchsatz klassifiziert sind, interagieren.

13. Vorrichtung nach Anspruch 7, **dadurch gekennzeichnet, dass** die Pakete, die für geringe Latenz klassifiziert sind, von einem ersten Prozessor verarbeitet werden, und die Pakete, die für hohen Durchsatz klassifiziert sind, von einem zweiten Prozessor verarbeitet werden.

14. Vorrichtung nach Anspruch 7, **dadurch gekennzeichnet, dass** die eine oder die mehreren Eigenschaften von der einen oder den mehreren Netzwerkverkehrsmanagementanwendungen gewählt werden.

## Revendications

1. Procédé de traitement de paquets de données de réseau destinés à des applications présentant une pluralité d'exigences en termes de débit et de temps de latence, le procédé étant mis en oeuvre par un système de gestion de trafic de réseau (100) comprenant un appareil de contrôleur de distribution d'applications (110), le procédé comprenant les étapes ci-dessous consistant à :
recevoir des paquets de données en provenance d'un réseau ;
classer les paquets de données en qualité de paquets classés comme étant à haut débit et de paquets classés comme étant à faible temps de latence, sur la base d'une ou plusieurs caractéristiques de chacun des paquets de données ;
stocker les paquets de données dans une file d'attente de paquets respective parmi une file d'attente de paquets à faible temps de latence et une file d'attente de paquets à haut débit, sur la base du classement ;
**caractérisé en ce que** le procédé comporte en outre les étapes ci-dessous consistant à :
traiter des paquets classés comme étant à faible temps de latence en provenance de la file d'attente de paquets à faible temps de latence ;
déterminer si un nombre prédéterminé des paquets de données est stocké dans la file d'attente de paquets à haut débit ; et
lorsqu'il est déterminé que le nombre prédéterminé des paquets de données est stocké dans la file d'attente de paquets à haut débit :
interrompre le traitement des paquets classés comme étant à faible temps de latence et traiter un ou plusieurs paquets classés comme étant à haut débit en provenance de la file d'attente de paquets à haut débit ; et
reprendre le traitement des paquets classés comme étant à faible temps de latence suite au traitement d'un nombre des paquets classés comme étant à haut débit.

2. Procédé selon la revendication 1, **caractérisé en ce que** l'étape de détermination comporte en outre au moins l'une des étapes ci-dessous consistant à :
interroger une mémoire en vue de déterminer si le nombre prédéterminé des paquets de données est stocké dans la file d'attente de paquets à haut débit ; ou
déterminer si toute autre condition existe qui exigerait que des paquets classés comme étant à haut débit soient traités à la place de paquets classés comme étant à faible temps de latence.

3. Procédé selon la revendication 1, comprenant en outre l'étape consistant à interrompre un processeur (210) suite à au moins l'une des étapes parmi l'étape de classement des paquets de données et l'étape de stockage des paquets de données dans la file d'attente de paquets à faible temps de latence.

4. Procédé selon la revendication 3, **caractérisé en ce qu'**il existe moins de paquets de données stockés dans la file d'attente de paquets à faible temps de latence que dans la file d'attente de paquets à haut débit lorsque se produit l'interruption du traitement des paquets classés comme étant à faible temps de latence.

5. Procédé selon la revendication 1, **caractérisé en ce que** ladite une ou lesdites plusieurs caractéristiques sont sélectionnées par une application de gestion de trafic de réseau exécutée par un processeur (210).

6. Support lisible par ordinateur non transitoire dans lequel sont stockées des instructions, qui, lorsqu'elles sont exécutées par un ou plusieurs processeurs (210) d'un dispositif de contrôleur de distribution d'applications (110), amènent ledit un ou lesdits plusieurs processeurs (210) à mettre en oeuvre un procédé de traitement de paquets de données de réseau destinés à des applications présentant une pluralité d'exigences en termes de débit et de temps de latence, selon une ou plusieurs des revendications 1 à 5.

7. Appareil de contrôleur de distribution d'applications (110) comprenant :
un ou plusieurs processeurs (210) configurés de manière à être en mesure d'exécuter une ou plusieurs applications de gestion de trafic ;
une mémoire (218) ;
un contrôleur d'interface de réseau (200) couplé audit un ou auxdits plusieurs processeurs (210) et à la mémoire (218), et configuré de manière à être en mesure de recevoir des paquets de données, en provenance d'un réseau, qui se rapportent à ladite une ou auxdites plusieurs applications de gestion de trafic de réseau ; et
au moins l'un dudit un ou desdits plusieurs processeurs (210) ou le contrôleur d'interface de réseau (200), configuré de manière à être en mesure de :
classer les paquets de données en qualité de paquets classés comme étant à haut débit et de paquets classés comme étant à faible temps de latence, sur la base d'une ou plusieurs caractéristiques de chacun des paquets de données ;
stocker les paquets de données dans une file d'attente de paquets respective parmi une file d'attente de paquets à faible temps de latence et une file d'attente de paquets à haut débit dans la mémoire, sur la base du classement ;
**caractérisé en ce qu'**au moins l'un dudit un ou desdits plusieurs processeurs (210), ou le contrôleur d'interface de réseau (200), est en outre configuré de manière à être en mesure de :
traiter des paquets classés comme étant à faible temps de latence en provenance de la file d'attente de paquets à faible temps de latence ;
déterminer si un nombre prédéterminé des paquets de données est stocké dans la file d'attente de paquets à haut débit ; et
lorsqu'il est déterminé que le nombre prédéterminé des paquets de données est stocké dans la file d'attente de paquets à haut débit :
interrompre le traitement des paquets classés comme étant à faible temps de latence et traiter un ou plusieurs paquets classés comme étant à haut débit en provenance de la file d'attente de paquets à haut débit ; et
reprendre le traitement des paquets classés comme étant à faible temps de latence suite au traitement d'un nombre des paquets classés comme étant à haut débit.

8. Appareil selon la revendication 7, **caractérisé en ce que** l'étape de détermination comporte en outre au moins l'une des étapes ci-dessous consistant à :
interroger la mémoire en vue de déterminer si le nombre prédéterminé des paquets de données est stocké dans la file d'attente de paquets à haut débit ; ou
déterminer si toute autre condition existe qui exigerait que des paquets classés comme étant à haut débit soient traités à la place de paquets classés comme étant à faible temps de latence.

9. Appareil selon la revendication 7, **caractérisé en ce qu'**au moins l'un parmi ledit un ou lesdits plusieurs processeurs (210), ou le contrôleur d'interface de réseau (200), est en outre configuré de manière à être en mesure d'interrompre au moins l'un parmi ledit un ou lesdits plusieurs processeurs, suite à au moins l'une des étapes parmi l'étape de classement des paquets de données ou l'étape de stockage des paquets de données dans la file d'attente de paquets à faible temps de latence.

10. Appareil selon la revendication 9, **caractérisé en ce qu'**il existe moins de paquets de données stockés dans la file d'attente de paquets à faible temps de latence que dans la file d'attente de paquets à haut débit lorsque se produit l'interruption du traitement des paquets classés comme étant à faible temps de latence.

11. Appareil selon la revendication 7, **caractérisé en ce que** l'étape de classement des paquets de données comporte les étapes ci-dessous consistant à :
écrire un premier pointeur à un emplacement de mémoire des paquets de données stockés dans la file d'attente de paquets à faible temps de latence, dans une première zone d'index de mémoire tampon au sein de la mémoire ; et
écrire un second pointeur à un autre emplacement de mémoire des paquets de données stockés dans la file d'attente de paquets à haut débit, dans une seconde zone d'index de mémoire tampon au sein de la mémoire.

12. Appareil selon la revendication 7, **caractérisé en ce que** ledit un ou lesdits plusieurs processeurs (210) exécutent ladite une ou lesdites plusieurs applications de gestion de trafic de réseau qui interagissent avec au moins l'un parmi les paquets classés comme étant à faible temps de latence ou les paquets classés comme étant à haut débit.

13. Appareil selon la revendication 7, **caractérisé en ce que** les paquets classés comme étant à faible temps de latence sont traités par un premier processeur, et les paquets classés comme étant à haut débit sont traités par un second processeur.

14. Appareil selon la revendication 7, **caractérisé en ce que** ladite une ou lesdites plusieurs caractéristiques sont sélectionnées par ladite une ou lesdites plusieurs applications de gestion de trafic de réseau.
